# EUROPÄISCHE PATENTANMELDUNG

(11) **EP 2 743 603 A2**
(43) Veröffentlichungstag der Anmeldung: **18.06.2014**
(21) Anmeldenummer: 13005836.5
(22) Anmeldetag: 16.12.2013
(51) Int. Cl.: F24J 2/00, F24J 2/34, F24J 2/40, F24J 2/42, F24D 11/00

(54) **Wärmenutzungssystem und Verwendung eines Passivwärmeabsorbers**

(30) Priorität: 14.12.2012 DE 102012024427
(71) Anmelder: Hamp, Friedrich, 82057 Icking (DE)
(72) Erfinder: Hamp, Friedrich, 82057 Icking (DE)
(74) Vertreter: Lindner, Manfred Klaus

(57) **Zusammenfassung**

Die vorliegende Erfindung betrifft ein Wärmenutzungssystem (1), mit wenigstens einem Plattenelement (3), das mit einer flächigen Außenseite (14) zu einer freien Umgebung hin und entgegengesetzt mit einer Innenseite (15) zu einem Gebäude, Gebäudeinneren oder Untergrund hin angeordnet ist, Halteeinrichtungen 12), mittels denen das wenigstens eine Plattenelement (3) an einem Gebäude, einem Gebäudedach, einer Gebäudedachkonstruktion oder einem Untergrund unter Schaffung eines Wärmereservoir-Hohlraums (4) angebracht ist, der auf einer Seite der Innenseite (15) des Plattenelementes (3) zugewandt ist, sowie wenigstens einem Passivwärmeabsorber (2), der in dem Wärmereservoir-Hohlraum (4) angeordnet ist. Ferner betrifft die vorliegende Erfindung die Verwendung eines Passivwärmeabsorbers (2) unter oder hinter einem Plattenelement (3), insbesondere einer Gebäudeaußenwandverkleidung, einer Dachbe- oder -eindeckung oder einem Photovoltaikelement, in einem Wärmereservoir-Hohlraum (4) zu einem Gebäude, Gebäudeinnenraum oder Untergrund hin.

## Beschreibung

Die vorliegende Erfindung betrifft ein Wärmenutzungssystem und eine Verwendung eines Passivwärmeabsorbers.

Zur Nutzung von Sonnenstrahlung und Umgebungswärme sind aus der Praxis Solarwärmenutzungssysteme mit Solarwärmeabsorbern bekannt, die auf Dächern und Freiflächen direkt der Sonnenstrahlung ausgesetzt werden, um eine Wärmeträgerflüssigkeit, die in Leitungen derart angeordneter Solarwärmeabsorber enthalten ist, zu erwärmen. Diese wärme wird dann beispielsweise in Haushalten insbesondere durch Transfer in Heizanlagen nutzbar gemacht.

Die exponierte Anordnung solcher Solarwärmeabsorber führt aber nicht nur zu einem unschönen Erscheinungsbild entsprechend ausgestatteter Bauwerke, sondern erfordert auch einen besonderen Montageaufwand, da beispielsweise für eine sturm- und allgemein wettersichere Befestigung Sorge getragen werden muss.

Weiterhin ist die für die Anordnung von Solarwärmeabsorbern zur Verfügung stehende Fläche begrenzt, insbesondere wenn gleichzeitig auch Photovoltaikelemente platziert werden sollen, so dass man sich entscheiden muss, ob auf einer Teilfläche entweder ein Solarwärmeabsorber oder ein Photovoltaikelement bereitgestellt werden soll.

Damit bestehen wesentliche Nachteile dieser bekannten Solarwärmenutzungssysteme darin, dass für ihre Solarwärmeabsorber spezielle Montageflächen benötigt werden, die nur beschränkt zur Verfügung stehen, und dass eine in erforderlicher Weise sichere Montage einen hohen Aufwand bedeutet.

Aus der DE 10 2008 009 553 A1 ist eine außenliegend Wandheizung bekannt. Dabei handelt es sich um eine so genannte Murokaustenanlage zur Nutzung der Außenwand eines Gebäudes als wärme- bzw. Kältespeicher. Ein Wärmetransport erfolgt mittels Heizungsrohren, die direkt zwischen einer Wärmedämmung und einem Mauerwerk eingebunden werden. In den zwischen Wärmedämmung und Mauerwerk entstehenden Hohlraum wird mittels eines Ventilators Frischluft eingeblasen die das Heiz- bzw. Kühlmedium in den Rohrleitungen durch Zwangskonvektion zum Wärmetausch anregt. Auch die in der Frischluft enthaltene Umgebungswärme/-kälte trägt zur Temperierung der Massivwand bei.

Die DE 10 2010 054 394 A1 offenbart ein Solarfassadensystem mit im wesentlichen transluzenter Außenhaut und einem zwangsbeltüfteten Hohlraum mit Luftleitblechen ohne wärmeübertragung an ein hydraulisches System. Die Speicherung von Wärme erfolgt in Phasenübergangsmaterial-Elementen. Eine Wärmespeicherung in massiven Bauteilen ist nicht ersichtlich.

Eine Gebäudeklimatisierung ist aus der DE 198 09 974 B4 bekannt. Wie insbesondere die Zeichnung der Publikation verdeutlicht, handelt es sich um ein innerhalb der thermischen Hülle geführtes Heiz- und Kühlsystem der Wandkonstruktion. Ein Solarabsorber stellt das Prinzip einer üblichen Solaranlage mit direkter Sonneneinstrahlung dar. Ein Wärmespeicher soll die solare Wärme direkt in die Wände einleiten.

Die Erfindung hat daher zum Ziel, ein Wärmenutzungssystem zu schaffen, das mit gegenüber dem Stand der Technik geringerem Aufwand montierbar ist und nicht mit der Nutzung von Montageflächen. für andere Zwecke, wie etwa der Aufstellung von Photovoltaikelementen, kollidiert.

Dieses Ziel wird mit einem Wärmenutzungssystem nach dem Anspruch 1 erreicht.

Die Erfindung schafft damit ein Wärmenutzungssystem, mit.
- wenigstens einem Plattenelement (3), das mit einer flächigen Außenseite (14) zu einer freien Umgebung hin und entgegengesetzt mit einer Innenseite (15) zu einem Gebäude, Gebäudeinneren oder Untergrund hin angeordnet ist,
- Halteeinrichtungen 12), mittels denen das wenigstens eine Plattenelement (3) an einem Gebäude, einem Gebäucedach, einer Gebäudedachkonstruktion oder einem Untergrund unter Schaffung eines Wärmereservoir-Hohlraums (4) angebracht ist, der auf einer Seite der Innenseite (15) des Plattenelementes (3) zugewandt ist,
- wenigstens einem Passivwärmeabsorber (2), der in dem Wärmereservoir-Hohlraum (4) angeordnet ist,
- einem Wärmespeicher (5), der zur Wärmespeisung mit dem wenigstens einem Passivwärmeabsorber (2) in Verbindung steht, sowie
- einer Steuerung, die ab einer vorgegebenen oder vorgebbaren minimalen Temperaturdifferenz zwischen einem Wärmeabsorptionsmedium in dem Passivwärmeabsorber (2) und einem Wärmespeichermedium in dem Wärmespeicher (5) eine Wärmeübertragung vom Passivwärmeabsorber (2) zum Wärmespeicher (5) zulässt oder betreibt,
wobei der Passivwärmeabsorber (2) oder der Wärmespeicher (5) thermisch mit Gebäudeheizeinrichtungen (6) gekoppelt ist.

Da für die Wirkung dieses erfindungsgemäßen Wärmenutzungssystems keine direkte Sonnenbestrahlung erforderlich ist, wird es im Folgenden auch als Passivwärmenutzungssystem bezeichnet.

Vorzugsweise ist bei einem solchen erfindungsgemäßen Wärmenutzungssystem in Form eines Passivwärmenutzungssystems ferner vorgesehen, dass das Plattenelement eine Gebäudeaußenwandverkleidung, eine Gebäudedachbe- oder -eindeckung oder ein Photovoltaikelement ist.

Eine andere bevorzugte Ausgestaltung der Erfindung besteht darin, dass der Passivwärmeabsorber oder der Wärmespeicher thermisch über einen Wärmetauscher mit Gebäudeheizeinrichtungen gekoppelt ist. Alternativ oder zusätzlich kann mit Vorzug vorgesehen sein, dass der Passivwärmeabsorber oder der Wärmespeicher über eine Wärmepumpe mit Gebäudeheizeinrichtungen oder den Gebäudeheizeinrichtungen gekoppelt ist.

Es kann ferner vorzugsweise vorgesehen sein, dass der Wärmespeicher unterhalb eines Gebäudes angeordnet ist, und/oder dass der Wärmereservoir-Hohlraum außerhalb einer thermischen Gebäudehülle liegt, die z.B. eine Außenwand eines Gebäudes oder eine Dämmung unterhalb einer Dachbedeckung sein kann und mit der im Folgenden angegebenen Tragstruktur vergleichbar oder identisch ist.

Eine andere bevorzugte Ausgestaltung liegt darin, dass die Steuerung ab einer Temperaturdifferenz von mindestens 5 °C zwischen dem Wärmeabsorptionsmedium in dem Passivwärmeabsorber und dem Wärmespeichermedium in dem Wärmespeicher die Wärmeübertragung vom Passivwärmeabsorber zum Wärmespeicher zulässt oder betreibt.

Es ist ferner bevorzugt, wenn der Passivwärmeabsorber wenigstens eine Absorberleitung mit einem Wärmeabsorptionsmedium enthält, wobei die Absorberleitung insbesondere
- eine metallische Leitung und besonders bevorzugt ein Kupferrohr ist, und/oder
- linear oder zumindest teilweise mäanderartig oder spiralartig geformt ist, und/oder
- Wärmeleitbleche vorzugsweise aus Aluminium aufweist oder damit gekoppelt ist.

Insbesondere kann bei den vorerwähnten Bauarten weiterhin vorgesehen sein, dass eine Mehrzahl von Absorberleitungen zu einer Absorbergruppe zusammengefasst ist, die insbesondere
- eine parallele Leitungsanordnung enthält, und/oder
- eine starre Anordnung ist, und/oder
- eine Flächenausdehnung von ca. 1 m² hat.

Bei den letztgenannten Ausgestaltungen kann vorzugsweise ferner eine Mehrzahl von Absorbergruppen zu einem hydraulischen Teilkreislauf verbunden sein, der insbesondere
- vier Absorbergruppen enthält, und/oder
- eine maximale Gesamtleitungslänge aller enthaltenen Absorberleitungen von ca. 50 m hat.

Eine bevorzugte Weiterbildung der Gestaltung mit hydraulischen Teilkreisläufen besteht darin, dass eine Mehrzahl von hydraulischen Teilkreisläufen bevorzugt im Tichelmannsystem hydraulisch an eine Hauptsammelleitung angeschlossen ist.

Weiterhin kann mit Vorzug vorgesehen sein, dass alle Komponenten des Passivwärmeabsorbers für einen Betrieb im Temperaturbereich von etwa - 30 °C bis ca. + 90 °C ausgelegt sind und/oder aus UV-beständigem Material bestehen. Alternativ oder zusätzlich ist es bevorzugt, dass der Passivwärmeabsorber mit einem für Solaranlagen zugelassenen Wärmeabsorptionsmedium, insbesondere einem Bioalkohol/Wasser-Gemisch oder einem Gemisch mit Frostschutzmittel, betrieben wird, und/oder dass ein Wärmeabsorptionsmedium in dem Passivwärmeabsorber gleichzeitig ein Wärmespeichermedium in einem Wärmespeicher ist.

Es kann ferner insbesondere vorgesehen sein, dass der Passivwärmeabsorber eine Bauhöhe von ca. 6 cm nicht übersteigt und insbesondere eine Bauhöhe von etwa 1 cm hat.

Das Ziel der Erfindung wird ferner durch Verwendung eines Passivwärmeabsorbers nach dem Anspruch 15, also unter oder hinter einem Plattenelement, insbesondere einer Gebäudeaußenwandverkleidung einer Dachbe- oder -eindeckung oder einem Photovoltaikelement, in einem Wärmereservoir-Hohlraum zu einem Gebäude, Gebäudeinnenraum oder Untergrund hin erreicht.

Bei diesem Aspekt der vorliegenden Erfindung sind sämtliche vorgenannten Aus- und Weiterbildungen ebenfalls möglich und es wird zur Vermeidung entsprechend formulierter Wiederholungen vollumfänglich auf die vorstehenden Angaben und Erläuterungen Bezug genommen.

Weitere bevorzugte und/oder vorteilhafte Ausgestaltungen der Erfindung und ihrer einzelnen Aspekte ergeben sich aus den abhängigen Ansprüchen und deren Kombinationen sowie aus den gesamten vorliegenden Anmeldungsunterlagen.

Die Murokaustenanlage gemäß der DE 10 2008 009 553 A1 unterscheidet sich damit grundlegend von dem Wärmenutzungssystem mit Passivwärmeabsorber gemäß der vorliegenden Erfindung. Bei dem erfindungsgemäßen Wärmenutzungssystem mit Passivwärmeabsorber werden keine wärmespeichernden Massen in Außenwänden bemüht. Im Gegenteil ist zur Erreichung einer schnellen thermischen Reaktionszeit die Montage außerhalb der thermischen Gebäudehülle von besonderer oder elementarer Bedeutung. Das Wärmenutzungssystem mit Passivwärmeabsorber erfasst hauptsachlich die Wärmestrahlung beispielsweise der hinterlüfteten Fassadenverkleidung oder Photovoltaikanlage und wird insbesondere durch eine sich ggf. einstellende thermische Zirkulation ohne Hilfsantrieb unterstützt. Die Nuzzung der anfallenden Wärmemenge findet z.B. im Zuge der Quellenvorlauftemperaturerwärmung einer Wärmepumpe bzw. durch Einlagerung der überschüssigen Wärme in einen vorzugsweisen Erdwärmeabsorber statt.

Im Unterschied zur vorliegenden Erfindung mit dem Wärmenutzungssystem mit Passivwärmeabsorber bemüht die Solarfassade gemäß der DE 10 2010 054 394 A1 im Wesentlichen durch das Erfordernis der Transluzenz die direkte Strahlung von Solarenergie auf die im Hohlraum angebrachten Absorberbleche. Die bei vielen Gebäuden negativ empfundene optische Beeinträchtigung von Fassaden durch transluzente Bauteile wird durch das Wärmenutzungssystem mit Passivwärmeabsorber gemäß der vorliegenden Erfindung vermieden.

Das Heiz- und Kühlsystem der Wandkonstruktion der Gebäudeklimatisierung gemäß der DE 198 09 974 84 enthält keinen erfindungsgemäßen Passivwärmeabsorber hinter einer Außenverkleidung außerhalb der thermischen Hülle eines Gebäudes. So gibt es bei diesem Stand der Technik keinen erfindungsgemäßen im Verdeckten arbeitenden Passivwärmeabsorber z.B. unter einer Dachbedeckung oder Photovoltaikanlage. Der aus der DE 198 09 974 B4 bekannte Wärmespeicher unter dem Gebäude dient nicht wie bei der vorliegenden Erfindung z.B. einer Wärmepumpe als Heizquelle.

Die Erfindung wird anhand von Ausführungsbeispielen nachfolgend unter Bezugnahme auf die Zeichnung lediglich exemplarisch näher erläutert, in der
- Fig. 1: ein Wärmenutzungssystem 1 in Form eines Passivwärmenutzungssystems in einer schematischen Prinzipskizze veranschaulicht ist,
- Fig. 2: ein Ausführungsbeispiel für einen Passivwärmeabsorber eines Passivwärmenutzungssystems und der Anordnung dieses Passivwärmeabsorbers in einer schematischen Schnittansicht veranschaulicht ist, und
- Fig. 3: in einer gegenüber der Darstellung in der Fig. 2 vergrößerten Ansicht Details des Passivwärmeabsorbers in einer weiteren schematischen Schnittansicht veranschaulicht sind.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen:in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der zeichnung sichtbar oder dargestellt sind, ohne weiteres für einen Fachmann verständlich.

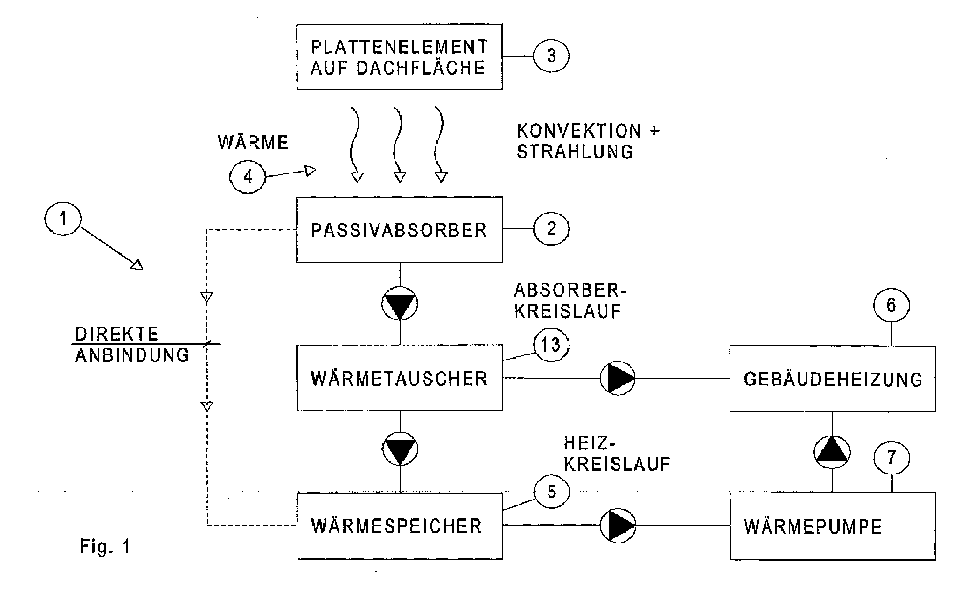

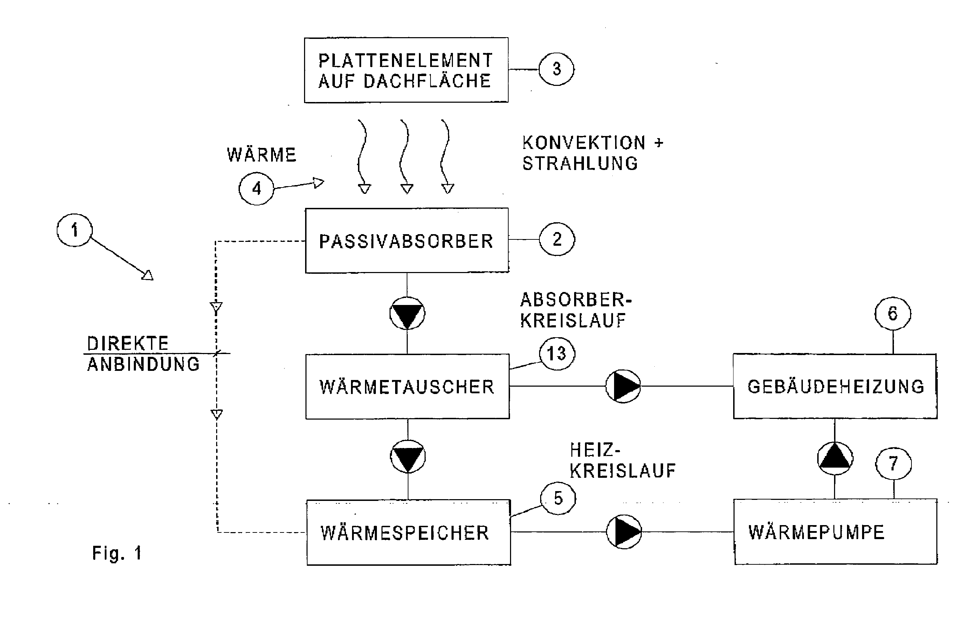

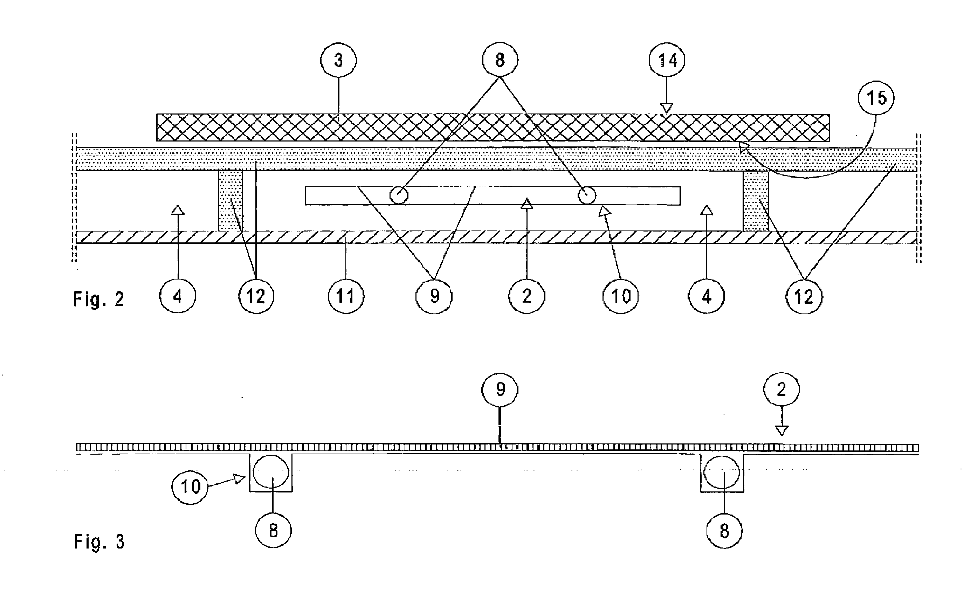

In der Fig. 1 ist exemplarisch ein Wärmenutzungssystem 1 in Form eines Passivwärmenutzungssystems in einer schematischen Prinzipskizze veranschaulicht. Die Fig. 2 und 3 zeigen in Schnittansichten einen Passivwärmeabsorber 2 des Passivwärmenutzungssystems 1 und die Anordnung dieses Passivwärmeabsorbers 2 sowie Details des Passivwärmeabsorbers 2.

Das gemäß dem in den Fig. 1 bis 3 gezeigten Ausführungsbeispiel konzipierte Wärmenutzungssystem 1 in Form des Passivwärmenutzungssystems dient dazu, Wärmeenergie welche bei von der Sonne beschienenen Bauelementen, wie beispielsweise einem Photovoltaikelement 3 rückwärtig in einen Wärmereservoir-Hohlraum 4 abgegeben wird, als Wärmestrahlung und Wärmekonvektion aufzunehmen und letztlich insbesondere einem Wärmespeicher 5 zuzuführen. Das Photovoltaikelement ist lediglich als Beispiel für allgemein ein Plattenelement 3 zu verstehen, und solche Platten- oder Bauelemente 3 können statt dem Photovoltaikelement z.B. auch eine Gebäudeaußenwandverkleidung oder eine Gebäudedachbe- oder -eindeckung sein, einschließlich Dachziegel. Dies bedeutet, dass selbst Dachböden, die sich bekanntlich bei Sonnenbestrahlung des Dachs selbst im Winter bedeutsam aufheizen, als WärmereservoirHohlräume genutzt werden können. Der Passivwärmeabsorber 2 ist insbesondere auch unter Dacheindeckungen und hinter Fassadenverkleidungen effizient einsetzbar, vor allem wenn er mit einem entsprechenden Wärmespeicher 5 kombiniert wird.

Bei dem Passivwärmenutzungssystem 1 dient der Passivwärmeabsorber 2 dazu, die hinter dem Photovoltaikelement 3 entstehende Wärme aufzunehmen und damit während der Heizperiode eine Gebäudeheizung 6 (Fußboden-/ Decken-/ Wandheizung) direkt zu unterstützen oder bei niedrigen Temperaturen des Passivwärmeabsorbers 2 vorher verfügbare Wärme in den Wärmespeicher 5, wie beispielsweise einen Großwärmespeicher, insbesondere unter dem Gebäude (nicht gezeigt) einzulagern. Die Wärmeübertragung vom Passivwärmeabsorber 2 zum Wärmespeicher 5 erfolgt generell ab einer Temperaturdifferenz von 5 °C zwischen Passivwärmeabsorber 2 und Wärmespeicher 5. Da der Wärmespeicher 5 unter dem Bauwerk liegt, muss eine Eisbildung vermieden werden, so dass das Passivwärmenutzungssystem 1 ab +2 °C Minimaltemperatur im Wärmespeicher 5 in Betrieb gehen kann.

Die im Wärmespeicher 5 eingelagerte Wärmeenergie wird bei einer Bauart des Passivwärmenutzungssystems 1 mittels beispielsweise einer Sole- oder Wasser/Wasser-Wärmepumpe 7 wieder entnommen und zu Heizzwecken über die Gebäudeheizung 6 an das Gebäude (nicht gezeigt) weitergeleitet. Der Effekt ist eine wesentliche Verbesserung der Jahresnutzungszahl der Wärmepumpe 7 durch die Anhebung der Quellentemperatur auf +25 °C und mehr. Durch.die große Masse des Wärmespeicher 5 ist es möglich über Wochen hinweg wärme zu entnehmen, wobei gleichzeitig über den Passivwärmeabsorber 2 eine fortlaufende Regeneration auch bei tiefen Außentemperaturen erfolgt.

Ein weiterer positiver Effekt ist die großflächige Rückseitenkühlung der Photovoltaikelemente 3. Durch Reduzierung der Hohlraumtemperatur hinter den Photovoltaikelementen 3, also der Temperaturreduzierung im Wärmereservoir-Hohlraum 4 durch Wärmeaufnahme daraus durch den Passivwärmeabsorber 2, wird der Wirkungsgrad der Photovoltaikelemente 3, besonders unter Volllast und hochsommerlichen Temperaturen, gesteigert.

Der Passivwärmeabsorber 2 enthält eine Mehrzahl von Absorberleitungen 8, die beim in den Fig. 2 und 3 gezeigten Ausführungsbeispiel aus Kupferrohr mit ca. 10 mm Durchmesser bestehen, woran Wärmeleitbleche 9 aus Aluminium angebracht sind. Die Absorberleitungen 8 können linear oder z.B. zumindest teilweise mäanderartig oder auch spiralartig geformt sein. Ferner sind die Absorberleitungen 8 samt Wärmeleitblechen 9 in parallelen Bahnen zu Gruppen, die hier als Absorbergruppen 10 bezeichnet werden, aneinandergefügt und starr verbunden. Die Baulänge einer Absorbergruppe 10 richtet sich nach einer jeweiligen Einbausituation oder nach der Länge eines Formwerkzeugs eines Bauteilherstellers. Im vorliegenden Anlagenkonzept werden zwei Bahnen mit 4 m Länge und 0,25 m Breite zu einer Absorbergruppe 10 mit 1 m² Flächenausdehnung oder Absorberfläche zusammengefügt (Länge der Absorberleitungen 8 mal Länge der Wärmeleitbleche 9). Vier solche Gruppen werden als hydraulischer Teilkreislauf (nicht gezeigt) in Folge miteinander verbunde.

Die Rohrleitungslänge (Gesamtleitungslänge der Absorberleitungen 8) je Teilkreislauf einschließlich Verbindungsleitungen (nicht gezeigt) wurde zur Reduzierung des hydraulischen Widerstands auf 50 m begrenzt. Beispielsweise bilden 23 Teilkreisläufe mit insgesamt 92 m² Absorberfläche (gesamte Flächenausdehnung) den Passivwärmeabsorber 2, wobei die 23 Teilkreiseläufe im Tichelmannsystem hydraulisch auf eine Hauptsammelleitung (Vor- und Rücklauf) angeschlossen werden.

Die Absorbergruppen 10 werden im hinterlüfteten Wärmereservoir-Hohlraum 4 mit ca. 6 cm Höhe unter den Photovoltaikelementen 3 einer Photovoltaikanlage (nicht gezeigt).mit geeigneten Mitteln (nicht gezeigt) an einer gemeinsamen Tragekonstruktion 11 befestigt, an der die Photovoltaik- oder allgemein Plattenelemente 3 nittels Halteeinrichtungen 12 angebracht sind. Je nach Beschaffenheit des Wärmereservoir-Hohlraums 4 und dessen konstruktiver Segmentargrenze ist eine senkrechte bis waagrechte Anordnung mög-. lich.

Sämtliche Verbindungsstellen der Rohrleitungen und Rohrmaterialien der Absorberleitungen 8 sind für eine thermische Nutzung von -30°C bis +90°C ausgelegt. Das Material der Absorberleitungen 8 ist bevorzugt UV-beständig. Die wird insbesondere durch Verwendung von Metallrohren erreicht. Damit lässt sich beispielsweise eine Haltbarkeit von mindestens 30 Jahren erreichen.

Die erzeugte Wärme wird über einen Wärmetauscher 13 (siehe Fig. 1) an den Wärmespeicher 5 oder bei einer anderen Bauart des Passivwärmenutzungssystems 1 an die Gebäudeheizung 6 (das Heizsystem) weitergegeben; es können auch beide Betriebsarten wähl- oder steuerbar vorgesehen sein.

üblicherweise sind die Absorberleitungen 8 des Passivwärmeabsorbers 2 sowie die daran angeschlossenen Leitungen zum und im Wärmetauscher 13 jeweils des Passivwärmenutzungssystems 1 mit einer für Solaranlagen zugelassenen Wärmeträgerflüssigkeit befüllt, die auch das Wärmeabsorptionsmedium bildet. Beim vorliegenden Ausführungsbeispiel wird dieser Teil des Passivwärmenutzungssystems 1 mit einem Bioalkohol/Wasser-Gemisch betrieben. Bei Einsatz einer Sole-Wärmepumpe 7 kann eine Anlagenlösung mit Frostschutzmittel (z.B. Ethylenglykol) ohne Wärmetauscher als Direktanschluss (siehe DIREKTE ANBINDUNG in der Fig. 1) sinnvoll sein. Der Wärmespeicher 5 ist hier ebenfalls mit einem Fluid mit Frostschutzmittel gefüllt, d.h. dass das Wärmeabsorptionsmedium im Passivwärmeabsorber 2 und das Wärmespeichermedium im Wärmespeicher identisch sind.

Den Medien- und entsprechenden Wärmetransport zu den Anlagenkomponenten betreibt beispielswiese eine Hocheffizienzpumpe (nicht gezeigt), welche vorzugsweise durch mittels den Photovoltaikelementen 3 erzeugten Solarstrom angetrieben wird.

Die Regelung des Passivwärmenutzungssystems 1 erfolgt vorzugsweise mittels Differenztemperaturmessung. Dazu ist eine entsprechende Steuerung (nicht gezeigt) vorgesehen, an die u.a. Temperaturfühler (nicht gezeigt) im Luftraum zwischen den Photovoltaikelementen 3 und dem Passivwärmeabsorber 2 sowie Anlagefühler (nicht gezeigt) am Vor- und Rücklauf (nicht gezeigt) der Sammelleitung (nicht gezeigt) angeschlossen sind. Die Steuerung übernimmt damit bevorzugt auch eine Informations- und Dokumentationsfunktion für den Betreiber. Die erzeugte Wärmemenge kann z.B. durch einen elektronischen Wärmemengenzähler festgehalten und ggf. auf eine Visualisierung übertragen werden. Die Aufzeichnung der thermischen Jahresdauerlinie in Korrelation mit der Jahresdauerlinie zur Solarstromerzeugmig und der Witterungsbedingungen wird anhand eines Rechenprogramms von der Steuerung durchgeführt. Wenn mit starker Taupunktunterschreitung insbesondere an dem Passivwärmeabsorber 2 und dessen Absorberleitungen 8 zu rechnen ist, sollte der Untergrund wasserdicht oder gut entwässernd ausgeführt werden.

Zur einfachen Orientierung sind in den Figuren eine flächige Außenseite 14 des Plattenelementes 3 zu einer freien Umgebung hin, und eine entgegengesetzt liegende Innenseite 15 des Plattenelementes 3 zu einem Gebäude, Gebäudeinneren oder Untergrund hin (jeweils nicht gezeigt) bezeichnet. Diese Innenseite 15 des Plattenelementes 3 ist dem Wärmereservoir-Hohlraum 4 und darüber hinaus dem Gebäude oder dem Gebäudeinnenraum, wie z.B. einem Dachstuhl, zugewandt.

Es kann ferner insbesondere vorgesehen sein, dass der Passivwärmeabsorber 2 eine Bauhöhe von ca. 6 cm nicht übersteigt und insbesondere eine Bauhöhe von etwa 1 cm hat. Entsprechende Maße gelten damit auch für Wärmereservoir-Hohlraum 4.

Durch die Erfindung wird somit ein Wärmenutzungssystem als Passivwärmenutzungssystem 1 und eine Nutzung eines Passivwärmeabsorbers 2 in Kombination mit einem ganzheitlichen energetisch äußerst vorteilhaften Gebäudekonzept unter Ausnutzung ansonsten ungenutzter Bereiche geschaffen. Durch die Anbringung des Passivwärmeabsorbers 2 hinter Verkleidung, Dach oder Photovoltaikelementen 3 wird nicht nur Platz gespart und ein durch das Aussehen von Passivwärmeabsorbern 2 geprägtes Erscheinungsbild von Gebäuden vermieden, sondern wird auch eine einfache und kostengünstige Montage der Passivwärmeabsorber 2 infolge der geschützten Platzierung erreicht. Bei der Kombination des Passivwärmenutzungssystems 1 mit Photovoltaikelementen 3 sorgt die Wärmeabfuhr durch die Passivwärmeabsorber 2 hinter den Photovoltaikelementen 3 für bessere Betriebsbedingungen für letztere.

zusammenfassend wird nochmals hervorgehoben, dass es für die vorliegende Erfindung ganz wesentlich ist, dass das Wärmenutzungssystem ein Passivwärmenutzungssystem mit einem Passivwärmeabsorber oder mehreren Passivwärmeabsorbern ist. Der gesamte eingangs erläuterte Stand der Technik betrifft die direkte Nutzung solarer Energie vom Dach oder von der Wand und bezieht sich zudem mehrheitlich auf Lüftungseinrichtungen in Fassadenelementen bzw. Wandheizungen. Dagegen handelt es sich bei dem Prinzip der vorliegenden Erfindung um eine Maßnahme außerhalb der thermischen Gebäudehülle, wie z.B. einer Gebäudeaußenwand oder einer Dämmung unter einer Dachbedeckung, ohne Einwirkung auf die Gebäudewände bezüglich Wärmespeicherung. Zudem ergibt sich in besonders vorteilhafter Weise eine Verbesserung des Wirkungsgrades einer Photovoltaikanlage, wenn die Plattenelemente durch Photovoltaikelemente gebildet sind, samt möglicher Abwärmenutzung, .und/oder die Nutzung von Wärme in hinterlüfteten Hohlräumen unter Fassaden- und Dachverkleidungen.

Die letztgenannten Varianten sind von besonderem Vorteil bei der Nutzung der Erfindung bei denkmalgeschützten Bauten. Die Passivabsorber können z.B. in einem Hohlraum zwischen Dachbedeckung und Dämmung, und damit außerhalb der thermischen Gebäudehülle, angeordnet werden. Die an diesem Ort zur Verfügung stehende Wärme wird dann entzogen und über das erfindungsgemäße Wärmenutzungssystem der Heizung bei Bedarf zur Verfügung gestellt. Durch den Einbau der Passivabsorber in den Hohlraum zwischen Dachbedeckung und Dämmung sind sie von außen nicht sichtbar und verschandeln die Optik eines denkmalgeschützten Gebäudes nicht. Auch von innen sind die Passivabsorber nicht sichtbar und haben daher auch hier keine negativen Auswirkungen, was die Ansichten im Inneren eines Dachstuhls eines denkmalgeschützten Gebäudes anbelangt.

Die thermische Gebäudehülle, außerhalb der der/die Passivabsorber eingebaut wird/werden, ist vergleichbar mit der oder gebildet oder repräsentiert durch die Tragekonstruktion 11, die in der Fig. 2 hinsichtlich ihrer Lage bezüglich dem/den Plattenelement(en) und dem/den Passivabsorber(n), und damit dem Wärmereservoir-Hohlraum verdeutlicht ist. Die Tragekonstruktion 11 steht damit repräsentativ für eine Gebäudeaußenwand..oder eine Dämmung unter einer Dachbedeckung und es kommt diesbezüglich nicht auf ihre Tragefunktion an, sondern lediglich darauf, dass sie die Grenze zwischen dem thermisch gegenüber der Unwelt getrennten Gebäudeinneren bildet. Insofern ist die Anwendung und Kombination der Erfindung bei bzw. mit einem Gebäude besonders bevorzugt und kann daher für sich auch als eigenständige Erfindungsvariante angesehen werden gegenüber beispielsweise freistehenden Photovoltaikelementen mit in dem freien Raum darunter platzierten Passivaborbern.

Die Erfindung ist anhand der Ausführungsbeispiele und deren Alternativen in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Erfindung kombinierbar.

### Bezugszeichenliste

- 1: Wärmenutzungssystem/Passivwärmenutzungssystem
- 2: Passivwärmeabsorber
- 3: Plattenelement (z.B. Photovoltaikalement)
- 4: Wärmereservoir-Hohlräum
- 5: Wärmespeicher
- 6: Gebäudeheizung
- 7: Wärmepumpe
- 8: Absorberleitungen
- 9: Wärmeleitbleche
- 10: Absorbergruppe
- 11: Tragekonstruktion
- 12: Halteeinrichtungen
- 13: Wärmetauscher
- 14: Außenseite des Plattenelementes 3
- 15: Innenseite des Plattenelementes 3

## Patentansprüche

1. Wärmenutzungssystem (1), mit
- wenigstens einem Plattenelement (3), das mit einer flächigen Außenseite (14) zu einer freien Umgebung hin und entgegengesetzt mit einer Innenseite (15) zu einem Gebäude, Gebäudeinneren oder Untergrund hin angeordnet ist,
- Halteeinrichtungen 12), mittels denen das wenigstens eine Plattenelement (3) an einem Gebäude, einem Gebäudedach, einer Gebäudedachkonstruktion oder einem Untergrund unter Schaffung eines Wärmereservoir-Hohlraums (4) angebracht ist, der auf einer Seite der Innenseite (15) des Plattenelementes (3) zugewandt ist,
- wenigstens einem Passivwärmeabsorber (2), der in dem Wärmereservoir-Hohlraum (4) angeordnet ist,
- einem Wärmespeicher (5), der zur Wärmespeisung mit dem wenigstens einen Passivwärmeabsorber (2) in Verbindung steht, sowie
- einer Steuerung, die ab einer vorgegebenen oder vorgebbaren minimalen Temperaturdifferenz zwischen einem Wärmeabsorptionsmedium in dem Passivwärmeabsorber (2) und einem Wärmespeichermedium in dem Wärmespeicher (5) eine Wärmeübertragung vom Passivwärmeabsorber (2) zum Wärmespeicher (5) zulässt oder betreibt,
wobei der Passivwärneabsorber (2) oder der Wärmespeicher (5) thermisch mit Gebäudeheizeinrichtungen (6) gekoppelt ist.

2. Wärmenutzungssystem (1) nach Anspruch 1, wobei das Plattenelement (3) eine Gebäudeaußenwandverkleidung, eine Gebäudedachbe- oder -eindeckung oder ein Photovoltaikelement ist.

3. Wärmenutzungssystem (1) nach Anspruch 1 oder 2, wobei der Passivwärmeabsorber (2) oder der Wärmespeicher (5) thermisch über einen Wärmetauscher (13) mit den Gebäudeheizeinrichtungen (6) gekoppelt ist.

4. Wärmenutzungssystem nach einem der vorhergehenden Ansprüche, wobei der Passivwärmeabsorber (2) oder der Wärmespeicher (5) über eine Wärmepumpe (7) mit Gebäudeheizeinrichtungen oder den Gebäudeheizeinrichtungen (6) gekoppelt ist.

5. Wärmenutzungssystem nach einem der vorhergehenden Ansprüche, wobei der Wärmespeicher (5) unterhalb eines Gebäudes angeordnet ist, und/oder
wobei der Wärmereservoir-Hohlraum (4) außerhalb einer thermischen Gebäudehülle liegt.

6. Wärmenutzungssystem (1) nach einem der vorhergehenden Ansprüche, wobei die Steuerung ab einer Temperaturdifferenz von mindestens 5 °C zwischen den Wärmeabsorptionsmedium in dem Passivwärmeabsorber (2) und dem Wärmespeichermedium in dem Wärmespeicher (5) die Wärmeübertragung vom Passivwärmeabsorber (2) zum Wärmespeicher (5) zulässt oder betreibt.

7. Wärmenutzungssystem (1) nach einem der vorhergehenden Ansprüche, wobei der Passivwärmeabsorber (2) wenigstens eine Absorberleitung (8) mit einem Wärmeabsorptionsmedium enthält, wobei die Absorberleitung (8) insbesondere
- eine metallische Leitung und besonders bevorzugt ein Kupferrohr ist, und/oder
- linear oder zumindest teilweise mäanderartig oder spiralartig geformt ist, und/oder
- Wärmeleitbleche (9) vorzugsweise aus Aluminium aufweist oder damit gekoppelt ist.

8. Wärmenutzungssystem (1) nach Anspruch 7, wobei eine Mehrzahl von Absorberleitungen (8) zu einer Absorbergruppe (10) zusammengefasst ist, die insbesondere
- eine parallele Leitungsanordnung enthält, und/oder
- eine starre Anordnung ist, und/oder
- eine Flächenausdehnung von ca. 1 m² hat.

9. Wärmenutzungssystem (1) nach Anspruch 8, wobei eine Mehrzahl von Absorbergruppen (10) zu einem hydraulischen Teilkreislauf verbunden ist, der insbesondere
- vier Absorbergruppen (10) enthält, und/oder
- eine maximale Gesamtleitungslänge aller enthaltenen Absorberleitungen (8) von ca. 50 m hat.

10. Wärmenutzungssystem (1) nach Anspruch 9, wobei eine Mehrzahl von hydraulischen Teilkreisläufen bevorzugt im Tichelmannsystem hydraulisch an eine Hauptsammelleitung angeschlossen ist.

11. Wärmenutzungssystem (1) nach einem der vorhergehenden Ansprüche, wobei alle Komponenten des Passivwärmeabsorbers (2) für einen Betrieb im Temperaturbereich von etwa - 30 °C bis ca. + 90 °C ausgelegt sind und/oder aus UV-beständigem Material bestehen.

12. Wärmenutzungssystem (1) nach einem der vorhergehenden Ansprüche, wobei der Passivwärmeabsorber (2) mit einem für Solaranlagen zugelassenen Wärmeabsorptionsmedium, insbesondere einem Bioalkohol/Wasser-Gemisch oder einem Gemisch mit Frostschutzmittel, betrieben wird.

13. Wärmenutzungssystem (1) nach einem der vorhergehenden Ansprüche, wobei ein Wärmeabsorptionsmedium in dem Passivwärmeabsorber (2) gleichzeitig ein Wärmespeichermedium in einem Wärmespeicher (5) ist.

14. Wärmenutzungssystem (1) nach einem der vorhergehenden Ansprüche, wobei der Passivwärmeabsorber (2) eine Bauhöhe von ca. 6 cm nicht übersteigt und insbesondere eine Bauhöhe von etwa 1 cm hat.

15. Verwendung eines Passivwärmeabsorbers (2) unter oder hinter einem Plattenelement (3), insbesondere einer Gebäudeaußenwandverkleidung, einer Dachbe- oder -eindeckung oder einem Photovoltaikelement, in einem Wärmereservoir-Hohlraurn (4) zu einem Gebäude, Gebäudeinnenraum oder Untergrund hin.
